# EUROPEAN PATENT SPECIFICATION

(11) **EP 2 335 182 B1**
(45) Date of publication and mention of the grant of the patent: **28.10.2015**
(21) Application number: 09817094.7
(22) Date of filing: 30.09.2009
(51) Int. Cl.: G06K 7/00, G06K 7/10, G06K 7/08, G06K 19/077

(54) **RINGUP/ RINGDOWN INTERROGATION OF RFID TAGS**
RINGUP/RINGDOWN-ABFRAGE VON RFID-TAGS
INTERROGATION D'ÉTIQUETTES RFID PAR MISE EN RÉSONANCE/SUPPRESSION DE RÉSONANCE

(30) Priority: 03.10.2008 US 136787 P
(43) Date of publication of application: 22.06.2011
(73) Proprietor: Bluechiip Pty Ltd, Scoresby, Victoria 3179 (AU)
(72) Inventor: DICKSON, Adam, Heidelberg, Victoria 3084 (AU)
(74) Representative: Lind, Urban Arvid Oskar
(86) International application number: PCT/AU2009/001293
(87) International publication number: WO 2010/037166

(56) References cited:
- WO-A1-2004/084131
- WO-A1-2004/084131
- WO-A1-2006/055709
- WO-A1-2008/061313
- WO-A1-2008/061319
- WO-A2-2007/149621
- GB-A- 2 149 275

## Description

### Field of the Invention

This invention relates to Radio Frequency Identification (RFID) systems including RFID tags and RFID readers, and more particularly to the reading of data encoded in such tags. The invention can be used in applications using passive RFID tags including micromechanical members that vibrate at resonant frequencies, and it will be convenient to describe the invention in relation to that exemplary, but nonlimiting, application.

### Background of the Invention

RFID systems typically include RFID tags and RFID readers (the latter are also known as RFID reader/writers or RFID interrogators). RFID systems can be used in many ways for locating and identifying objects to which the tags are attached. RFID systems are particularly useful for tracking large numbers of objects being processed, inventoried, or handled. In such cases, an RFID tag is usually attached to an individual item, or to its package.

In principle, an RFID interrogator transmits a Radio Frequency (RF) wave to one or more RFID tags. A tag that senses the interrogating RF wave responds by transmitting back another RF wave. The tag generates the transmitted back RF wave either originally, or by reflecting back a portion of the interrogating RF wave in a process known as backscatter. Backscatter may take place in a number of ways. The reflected-back RF wave may further encode data stored internally in the tag, such as a number. The response is demodulated and decoded by the reader, which thereby identifies, counts, or otherwise interacts with the associated item. The decoded data can denote a serial number, a price, a date, a destination, other attribute(s), any combination of attributes, and so on.

An RFID tag typically includes an antenna system, a power management section, a radio section, and frequently a logical section, a memory, or both. In earlier RFID tags, the power management section included an energy storage device, such as a battery. RFID tags with an energy storage device are known as active tags. Advances in semiconductor technology have miniaturized the electronics so much that an RFID tag can be powered solely by the RF signal it receives. Such RFID tags do not include an energy storage device, and are called passive tags.

International Patent Applications WO 2004/084131 and WO 2004/083798 both describe passive RFID tags or memory devices that utilize arrays of vibrating members to encode data. These members may take the form of cantilever and bridge structures, and may have different resonant frequencies from one another so that the presence or absence of a vibrating member of a particular frequency may be equated to a logical "1" or "0", and may represent binary code, a status flag or the like. A determination of the presence or absence of a member may be made by applying an excitation signal to the array and by analysing the response to determine if it is indicative of a particular member's resonant frequency. The arrays may be fabricated using MEMS technology (microelectromechanical systems technology), which is also known as MST (Micro System Technology) and micromachining. MEMS technology includes fabrication technologies for integrated circuits, and technologies specifically developed for micromachining. It generally relates to the fabrication of components with dimensions in the range of micrometers to millimeters. Reference to RFID hereafter in this document will presume the use of vibrating elements for data storage.

Each such RFID tag includes electrically or electronically active elements to electrodynamically couple the motion of the vibrating member and an external interrogation circuit. One electrodynamic interaction which may be employed in a RFID tag is Lorentz force/Faraday induction. A conductor runs along or through the vibrating members and extends beyond the vibrating members on the RFID tag to electrical terminals. A coil antenna interconnects the terminals. The vibrating member is located in a region of non-zero magnetic field. An alternating electrical current induced in the coil antenna (and hence the conductor) by a corresponding coil in the interrogation circuit. The lines of this magnetic field are so oriented that a Lorentz force associated with the alternating electrical current flowing through the conductor tends to displace the vibrating members from an equilibrium position.

The energy associated with movement and displacement of the vibrating member, as well as other energy storage mechanisms such as electrostatic energy, will be manifest between the electrical terminals in the RFID tag as relationships between terminal voltages and currents. These relationships can be expressed as an equivalent electrical circuit. Such equivalent circuits will include inductive and/or capacitive elements. In addition, mechanical resonances of a vibrating member are typically damped by a number of mechanisms including intrinsic causes such as visco-elastic and thermo-elastic loss. Such losses also manifest in the equivalent electrical circuit as resistive elements.

Each vibrating member is fabricated to have a distinct resonant frequency. When the frequency of the applied alternating electrical current corresponds to the resonant frequency of a particular vibrating member, that member is caused to mechanically resonate. The oscillating motion of the beam in a magnetic field causes by Faraday Induction an electromotive force in the circuit consisting of the conductive path through or comprising the resonators and the components attached to these, including an electromagnetic coupling. An oscillating electromagnetic signal is therefore transmitted back the external interrogation circuit. This additional contribution of electromotive force can be interpreted as an increment in impedance, as the ratio of the electromotive force to the current passing through the beam.

An RFID tag may have the property that the magnitude of the impedance change caused by the mechanical resonance of a particular vibrating member is much smaller that the "background" impedance directly associated with the electrical elements of the equivalent electrical circuit within the RFID tag. In the case of Lorentz force/Faraday induction based coupling, for typical configurations, the resonant impedance change is several orders of magnitude smaller than the background impedance, namely the ohmic resistance of the beam conductors and electrical interconnections.

In one scenario, an RFID tag may be interrogated by injection of a steady-state alternating current to its terminals at an appropriate frequency. The voltage appearing across the terminals can be regarded as the corresponding response. This response will include a largely frequency-independent or at least relatively slowly varying with frequency component due to the ohmic resistance of the beam conductors and electrical interconnections, superposed with small increments at and around each electrically-manifested resonant frequency. By sweeping though a range of frequencies, the totality of small voltage increments versus frequency provides the sought after information on the presence of mechanical resonant elements. Typically, these voltage increments will be several orders of magnitude smaller than the background response. This property can make detection of resonance of the vibrating members, and hence the data encoded in the RFID tag extremely difficult.

It would be desirable to address this difficulty associated with the interrogation of RFID tags based on vibrating elements. It would also be desirable to overcome or at least alleviate one or more problems with prior art RFID tags and interrogation techniques. It would furthermore be desirable to provide a method of interrogating an RFID tag or memory device which is more easily readable than prior art RFID tags.

The above discussion of background art is included to explain the context of the present invention. It is not to be taken as an admission that any of the documents or other material referred to was published, known or part of the common general knowledge at the priority date of any one of the claims of this specification.

### Summary of the Invention

One aspect of the invention provides method of interrogating an RFID memory device encoding data, the memory device including one or more vibrating members each being able to resonate, upon application of a ring-up signal, at a different known resonant frequency selected from a series of known resonant frequencies within a frequency range, the method including the steps of:
(a) applying a sequence of ring-up signals to the memory device, each ring-up signal being applied in a different frequency partial-band within the frequency range;
(b) after each ring-up signal, receiving a ring-down signal from the memory device;
(c) detecting resonances of the vibrating members from the ring-down signals; and
(d) determining the encoded data from the detected resonances.

The method of interrogating an RFID memory device according to the present invention uses a ring-up/down interrogation technique which exploits a property of the resonance increments in relation to the background that is not exploited in steady-state interrogation techniques. This ring-up/down interrogation technique operates by application of an electrical stimulus of appropriate band width to which one or more of the resonances can respond and absorb some amount of energy, holding it in (ultimately) mechanical form ("ring-up"). This stimulus is then reduced to zero, and the electrical response appearing across the terminals of the device then recorded ("ring-down").

Each inductor-capacitor resonant-pair of ultimately mechanical origin in the electrical equivalent circuit is associated with an energy-storage property. These resonant systems are capable of holding energy for time durations far in excess of other elements in the equivalent electrical circuit, particularly in the case of Lorentz force/Faraday induction coupling, where the dominant remaining elements are interconnection ohmic resistance. This later property entirely lacks energy-storage capability.

This response will consist of contributions from all those resonances which absorbed energy from the stimulus phase, but importantly will consist of none from non-energy storing elements (such as the ohmic resistance in the example described above). In this way, the background impedance directly associated with the electrical elements of the equivalent electrical circuit within the RFID tag is removed and the impedance change caused by the mechanical resonance of a particular vibrating member is more easily detectable. The appropriate level of this stimulation may be set by material or mechanical constraints, such as electro-migration, heating-limited electrical current density, mechanical nonlinearity or deformation, etc.

In a practical wireless interrogation context, where the connection between the interrogator and RFID tag is achieved by electromagnetic coupling, the finite-duration of energy storage in typical components associated with such a coupling such as antenna coils, capacitors, and the like. Even in this case, the duration of energy storage in the equivalent electrical circuit of a mechanical resonator will still greatly exceed the energy storage time within electrical circuits of this latter type.

However, even with the removal of background impedance, it may be difficult to distinguish the electrical signal from electrical noise present alongside the sought-after ring-down signal. Accordingly, different classes of stimulus are applied in the method of interrogating an RFID memory device according to the present invention, each covering distinct sub-ranges of the total frequency range occupied by the resonances. For a given peak instantaneous stimulus, the energy available to be accumulated by any particular resonance can be optimized. The response associated with this resonance is therefore larger in the same proportion. The signal-to-noise ratio (in power terms) is therefore improved the ratio of this proportion squared, and detection of the change in impedance in the equivalent electrical circuit of the RFID memory device is made easier to achieve. These distinct responses can be combined appropriately to give a response equivalent to that occurring in the full bandwidth occupied by the resonances.

Optionally, the method of interrogating an RFID memory device further includes the step of: repeating steps (a) and (b); and, prior to detecting resonances of the vibrating members, averaging the ring-down signals applied in the same partial-band.

Step (c) of the method may include the steps of generating frequency domain representations of ring-down signals applied in the same partial-band;
combining the frequency domain representations of ring-down signals applied in all partial-bands within the frequency range; and
detecting resonances of the vibrating members from the combined frequency domain representations of ring-down signals.

The step of combining all frequency domain representations of ring-down signals may include summation of the complex amplitudes of the frequency domain representation of ring-down signals.

The method may further including the step of applying a shaping function in the frequency domain to one or both of the ring-up and ring-down signals such that the plurality of ring-down responses is combined in step (c) to yield an overall response which substantially flat across the frequency range.

The shaping function applied to ring-up signals in each frequency partial-band may be half-sinusoidal. Similarly, the shaping function applied to ring-down signals in each frequency partial-band may also be half-sinusoidal. It will be appreciated however, that various other shaping functions can be applied to one or both of the ring-up and ring-down signals in order to achieve a substantially flat overall response across the frequency range.

At least a plurality of the partial-bands may overlap. The appropriate amount of overlap is specific to the shaping functions, but in the half-sinusoidal case is 50%.

The received noise level associated with the overall response may be substantially identical to the noise level with the response associated with any individual partial-band.

Each shaping function may be centred on a corresponding partial-band centre frequency, and the width of each shaping function is equal to twice the frequency increment between adjacent partial-band centre frequencies.

Step (a) may include applying an equalisation function to the spectral shape of the ring-up signals across the frequency range. In this case, the method may further include the step of changing the form of the equalisation function every one or more partial-bands.

Similarly, step (b) may include applying an equalisation function to the spectral shape of the ring-down signals across the frequency range. In this case, the method may further include the step of changing the form of the equalisation function every one or more partial-bands.

Steps (a) and (b) respectively may include inverting the phase of consecutive ring-up signals, and performing compensating inversion of the ring-down response, so as to eliminate the contribution of electrical transients associated with the ring-up/ring-down hardware transition to the averaged ring-down response.

Another aspect of the invention provides an RFID interrogator for interrogating an RFID memory device encoding data, the memory device including one or more vibrating members each being able to respond, upon application of a ring-up signal, at a different known resonant frequency selected from a series of known resonant frequencies within a frequency range, the RFID interrogator including
ring-up circuitry for applying a sequence of ring-up signals to the memory device, each ring-up signal being applied in a different frequency partial-bands within the frequency range;
ring-down circuitry for receiving a ring-down signal from the memory device after each ring-up signal; and
analysis circuitry and/or software for detecting resonances of the vibrating members from the ring-down signals, and for determining the encoded data from the detected resonances.

Embodiments of the invention will now be described, by way of example only, with reference to the accompanying drawings. It is to be understood that the particularity of the drawings and embodiments does not supersede the generality of the preceding description of the invention.

### Brief Description of the Drawings

In the drawings:
Figure 1 is a schematic diagram showing an exemplary embodiment of an RFID system including an RFID interrogator and an RFID memory device;
Figure 2 is a schematic diagram of the RFID memory device forming part of the RFID system shown in Figure 1;
Figure 3 is an isometric view of one embodiment of a vibratable member forming part of the RFID memory device shown in Figure 2;
Figure 4 is an isometric view of another embodiment of a vibratable member forming part of the RFID memory device shown in Figure 2;
Figures 5 and 6 are flow charts depicting steps involved in the operation of the RFID system shown in Figure 1; and
Figures 7 to 15 depict wave forms of signals appearing at various locations during operation of the RFID system shown in Figure 1.

### Detailed Description of Embodiments of the Invention

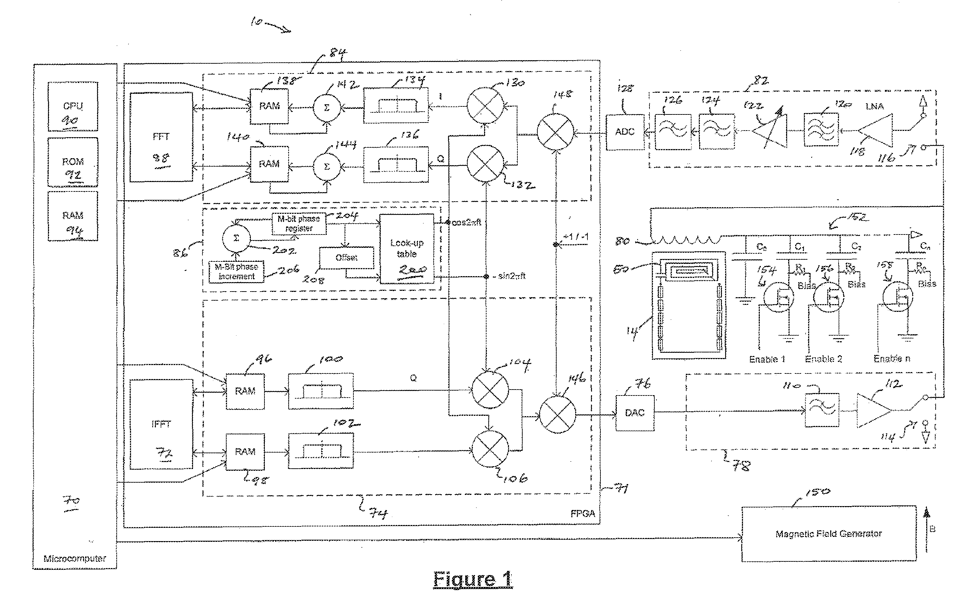

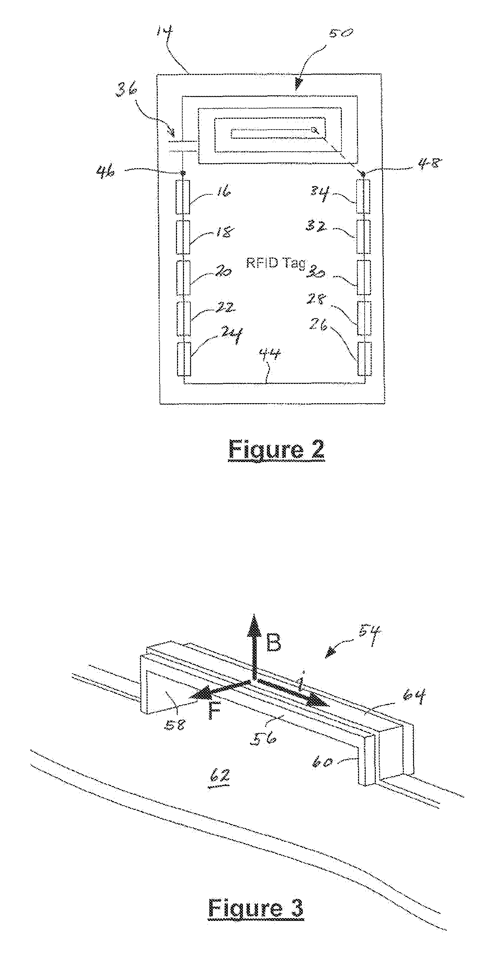

Throughout the detailed description and the accompanying drawings, like referenced elements in the figures refer to like elements in the description. Referring now to Figures 1 and 2, there is shown generally an RFID system 10 including an RFID interrogator 12 and an RFID tag or memory device 14. The RFID memory device includes a plurality of micromechanical vibratable members 16 to 34 each having a particular resonant frequency. A common electrical conductor 44 runs along or through the vibratable members and extends beyond the vibratable members to electrical terminals 46 and 48. A coil antenna 50 and series connected capacitor 36 interconnect the terminals 46 and 48. The vibratable members 16 to 42, the electrical conductor 44, the electrical terminals 46 and 48, the capacitor 36 and the coil antenna 50 may be formed on a dielectric or semi-conductor substrate.

The vibratable members 16 to 34 are caused to vibrate by an applied excitation or interrogation signal generated by the RFID interrogator 12 that induces an alternating current in the electrical conductor 44 by means of Faraday induction via the coil antenna 50. The exemplary vibratable members 16 to 34 are described in International Patent Application WO 2004/084131.

In one exemplary embodiment, the vibratable members 16 to 34 are vibratable by a Lorentz force. The Lorentz force is the force that acts on a charged particle travelling through an orthogonal magnetic field. In this instance, a magnetic field is applied to the vibratable members 16 to 42 in a direction perpendicular to the current flow through the electrical conductor 44.

Figure 3 depicts an exemplary vibratable member in the form of a bridge structure 54 including a beam 56 supported by two columns 58 and 60 projecting from a substrate 62. The structure shown in Figure 2 may be formed by conventional semi-conductor fabrication techniques involving the use of known etching and electro-deposition processes. Once the bridge structure 54 has been formed on the substrate 62, an electrically conductive path 64 is then electro-deposited along the length of the structure 54. The electrically conductive path 64 forms part of the conductor 44 shown in Figure 2.

When an interrogation signal is applied to the RFID memory device 14, alternating electrical current is induced in the antenna coil 50 which thus causes the flow of electrical current through the conductive path 64. In the presence of an orthogonal magnetic field, a force is then applied to the beam 56 in a direction that is orthogonal to both the direction of current flow and the magnetic field direction. Since the current in the conductor 64 is an alternating current, the orthogonal force generated is also an alternating force, resulting in the vibration of the beam 56. If the frequency of the alternating current in the conductor 64 is at or near the the resonant frequency of the beam 56, the beam 56 will vibrate.

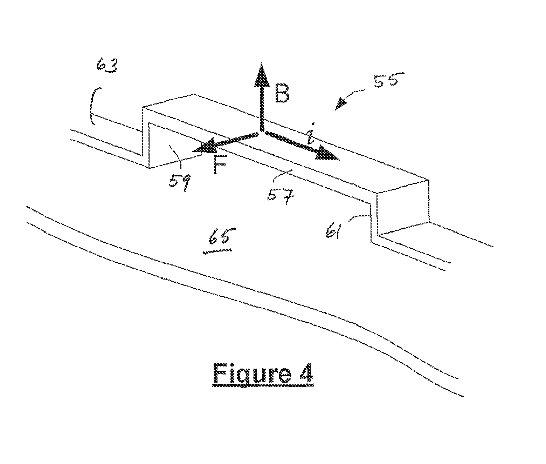

Another exemplary vibratable member is shown in Figure 4. In this case, the vibratable member is in the form or a bridge structure 55 including a beam 57 supported by two columns 59 and 61. Unlike the embodiment depicted in Figure 3 though, the beam 57 is formed from the same material as the electrically conductive path 63 supporting the two columns 59 and 61. The structure shown in Figure 4 may be formed by conventional semi-conductor fabrication techniques involving the use of known etching and electro-deposition processes. Typically, the electrically conductive path 63, columns 59 and 61 and mean 57 are deposited on the substrate 65 in the same deposition step(s).

Returning once again the Figure 1, the RFID interrogator 12 includes a microcomputer 70, an Inverse Fast Fourier Transform (IFFT) block 72, a up-conversion/interpolation section 74, a digital to analogue converter 76, an analogue transmitter section 78, an interrogator coil antenna 80, an analogue receiver section 82, a down-conversion/decimation section 84, a quadrature partial band local oscillator 86 and a Fast Fourier Transform (FFT) block 88. In this embodiment, the IFFT block 72, up-conversion/interpolation section 74, down-conversion/decimation section 84, quadrature partial band local oscillator 86 and Fast Fourier Transform (FFT) block 88 are implemented in hardware using a Field Programmable Gate Array (FPGA) device 71.

The RFID interrogator 12 furthermore includes a magnetic field generator 150 for generating the required magnetic field depicted in Figure 2. The magnetic field generator 150 may be implemented in a number of ways, for example, by use of one or more electromagnets or permanent magnets. In this example, operation of the magnetic field generator 150 is controlled by the microcomputer 70. The microcomputer 70 includes a conventional central processing unit 90 with associated volatile memory 92 and non-volatile memory 94. Both memories 92 and 94 are used for the storage of programs and data.

The partial band up-conversion/interpolation section 74 includes memory devices 96 and 98 which respectively store data corresponding to the imaginary and real components of a frequency domain spectral synthesis of a narrow band signal having a half sinusoidal shape. Frequency-domain data is firstly transferred from the microcomputer 70 to the memory devices 96 and 98. The IFFT block 72 then performs an inverse Fast Fourier Transform on the data stored in the memory devices 96 and 98 so that the data is transformed from the frequency domain into the time domain. The partial band up-conversion/interpolation section 74 further includes Finite Impulse Response (FIR) interpolation filters 100 and 102 respectively connected to outputs of the memory devices 96 and 98. The FIR interpolation filters act to up-sample the data stored in the memory devices 96 and 98, thereby minimising the data required to be stored in those memory devices as well as improving the accuracy of computations subsequently performed in the RFID interrogator 12. The up-conversion/interpolation section 74 pass-band bandwidth is sufficient to admit the partial-band bandwidth.

The RFID interrogator 12 further includes a quadrature Direct Digital Synthesiser (DDS) partial-band local oscillator 86. The DDS partial-band local oscillator 86 includes a look-up table 200 for storing the amplitude of a sinusoidal waveform at a series of discrete phase angles. An accumulator, consisting of a summation device 202 and an M-bit phase register 204, steps between consecutive phase angles at a frequency determined by an M-bit phase increment 206. Accordingly, the DDS partial-band local oscillator 86 acts to read values in the look-up table 200 and thereby generate a digital representation of the cosine of a time varying signal at a desired partial-band centre frequency. An offset block 208 enables the simultaneous reading of values in the look-up table 200 of a digital representation of the minus sine of that a time varying signal.

The partial band up-conversion/interpolation section 74 includes multipliers 104 and 106. The multiplier 104 acts to multiply the interpolated time domain imaginary component of the narrow band signal spectral synthesis with the time varying minus sine function produced by the quadrature partial band local oscillator 86. Similarly, the multiplier 106 acts to multiply the real component of the narrow band signal spectral synthesis at the output of the FIR interpolation filter 102 by the time varying cosine function generated by the quadrature partial band local oscillator 86.

The outputs from the two multipliers 104 and 106 are added and then provided as an input to the digital to analogue converter 76. The signal resulting from this addition corresponds to a time domain representation of the real part only of a complex signal having a frequency spectrum of a half sinusoidal shape which is centred at a desired partial-band centre frequency determined by the local oscillator 86. The output of the digital to analogue converter 76 is supplied to the analogue transmitter block 78, which includes a low pass filter 110 and Radio Frequency (RF) power amplifier 112. When a transmission switch 114 forming part of the analogue transmitter strip is switched to a transmit position, a "ring-up" signal at the output of the RF power amplifier 112 is supplied to the interrogator coil antenna 80. A corresponding signal is generated in the antenna coil 50 of the RFID memory device 14 by transformer action. In this embodiment, this transmission switch is implemented using MOSFETs.

It is desirable to include a series-resonance capacitance in series with the interrogator antenna coil 80 and the RF power amplifier 112 in order to ensure a maximal current flow in the antenna coil 80, given that the maximum output voltage of the RF power amplifier 112 is generally limited to a maximum value. It is also desirable that a consistent level of current is induced in the RFID memory device coil antenna 50, across the range of frequencies within which ring-up signals may be applied. To this end it may be necessary to alter the value of the capacitance in series with the interrogator antenna coil 80 as the interrogation process steps through the sequence of partial bands. This capability for altering capacitance is shown in Figure 1 by a capacitor bank 152 including capacitors C₁, C₂...Cₙ. Each of the capacitors C₁, C₂...Cₙ is connectable in series with the antenna coil 80 by selective operation of tuning MOSFETs 154, 156 and 158 controlled by the microcomputer 70. An additional optional capacitor C₀ serves to set the maximum tuning frequency of this array in the operating situation where all MOSFETs are biased off.

Since the voltages at the drains of the tuning MOSFETs 154, 156 are generally much higher than that present at the output of the RF power amplifier, by virtue of the resonant magnification of C₀, C₁, C₂...Cₙ in conjunction with the antenna coil 80, a DC bias supply of sufficient magnitude is required. In Figure 1, the MOSFETs 145, 156 are illustrated as N-channel devices, so this DC bias supply should have a positive voltage with respect to the sources of the MOSFETs. However the a configuration using P-channel MOSFETs is equally valid, however the DC bias supply voltage should have a negative value with respect to the sources of the MOSFETs. This DC bias value is chosen so as to ensure that any given MOSFETs in an off state always has a positive voltage on its drain terminal. Parasitic conduction though this MOSFETs body-diode is thereby avoided in operation. The DC bias is conveyed to the drains of the MOSFETs by suitable resistors R₁ to Rₙ.

After each ring-up signal is applied to the RFID memory device 14, and then subsequently removed, an electrical response will appear across the coil antenna 50 due to contributions from resonances in the RFID memory device 14 which absorbed energy during the ring-up signal. This electrical response or "ring-down" signal is transferred to antenna 80 by transformer action and applied to the input of the analogue receiver block 82.

The analogue receiver section 82 includes a receiver front end switch 116, an RF low noise amplifier 118, band pass filter 120, adjustable RF gain strip 122, high pass filter 124 and low pass filter 126. The various elements forming part of the analogue receiver at step 82 act to condition the ring-down signal before application to an analogue to digital converter 128. After digitisation by the analogue to digital converter 128, the ring-down signal is then down-converted and decimated by the partial band down-conversion/decimation section 84. Accordingly, the digitised ring-down signal at the output of the analogue to digital converter 128 is applied to the input of multipliers 130 and 132 for multiplying respectively with the digitised cosine function and digitised negative sine function generated by the local oscillator 86.
The outputs of the multipliers 130 and 132 correspond to time domain digital representations of the real and imaginary components of the down-converted ring-down signal. The partial band down-conversion/decimation section 84 includes FIR filters followed by decimators 134 and 136, respectively connected to the outputs of multipliers 130 and 132. The FIR decimation filters 134 and 136 act to down sample the digitised signals received from the outputs of the multipliers 130 and 132. The partial band down-conversion/decimation section 84 further includes memory devices 138 and 140 for storing the down-sampled digitised data received from the outputs of the FIR decimation filters 134 and 136. Summation devices 142 and 144 are respectively connected between the FIR decimation filter 134 and memory device 138, and the FIR decimation filter 136 and the memory device 140 so that the real and imaginary component of a number of digitised and down converted ring-down signals can be summed (for purposes of averaging) in the memory devices 138 and 140. The down-conversion/decimation section 84 pass-band bandwidth is also sufficient to admit the partial-band bandwidth.

The digitised time domain data stored in the memory devices 138 and 140 is forwarded to the FFT block 88 for transformation into the frequency domain. The microcomputer can then collect the frequency-domain data from this memory. This data, namely ring-down signals averaged over one or more ring-up/ring-down cycles is then analysed by the microcomputer to identify resonances from the RFID memory device 14.

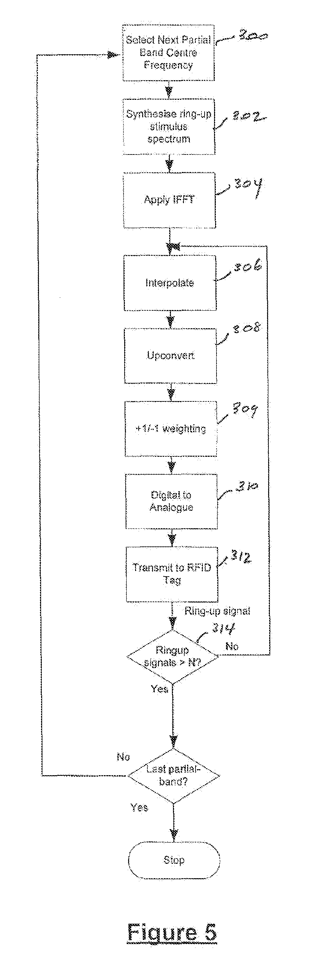

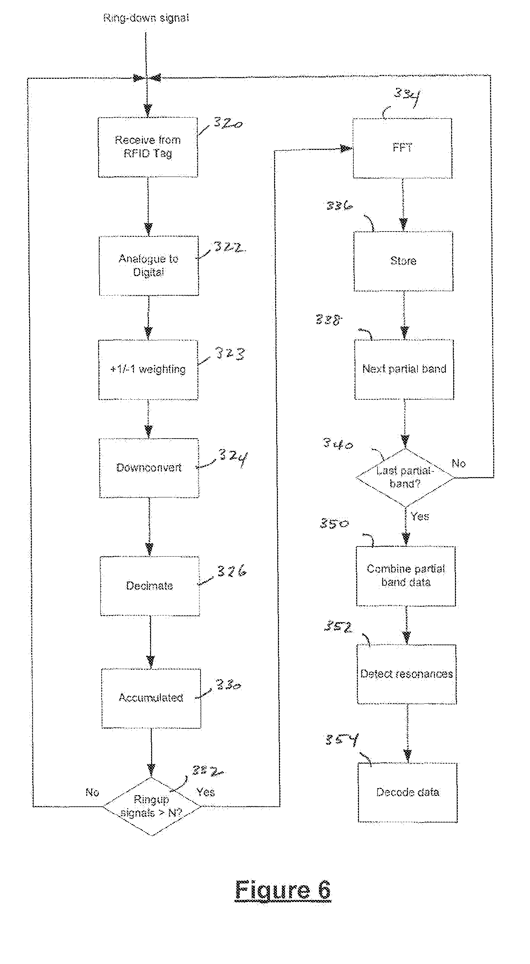

Figures 5 and 6 depict various data processing steps that occur during the ring-up and ring-down phases of the RFID system 10. As explained in relation to Figures 2 to 4, the RFID memory device 14 includes a number of vibratable members each being able to resonate, upon application of a ring-up signal, at a different known resonant frequency selected from a series of known resonant frequencies within a frequency range.

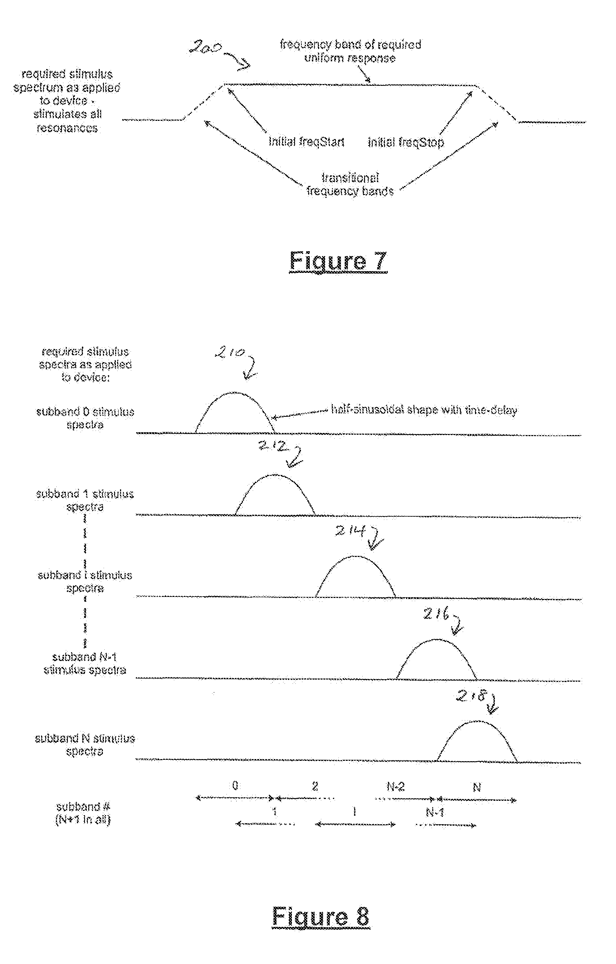

Figure 7 depicts one such frequency range 200. Rather than applying ring-up signals across the entire frequency range 200 in order to interrogate the RFID memory device 14, the energy available for generation of a ring-up signal is concentrated into a series of different frequency partial-bands within the frequency range 200. Exemplary frequency partial-bands 210 to 218 are depicted in Figure 8. The spectral shape of the stimulus spectra applied to the RFID memory device 14 has a half sinusoidal shape and adjacent frequency partial-bands overlap by 50 per cent.

As seen in Figure 5, during the ring-up phase, the microcomputer 70 initiates a sequence of signal processing steps within the FPGA device 71 with spectral synthesis data. At step 300, the partial-band centre frequency selected by the microcomputer is passed to the FPGA quadrature partial band local oscillator 86. This is the frequency about which the spectral shape of the ring-up signal applied in each frequency sub-range will be centred. At step 302, the microcomputer 70 synthesises a ring-up stimulus spectrum which is transferred to the FPGA memory devices 96 and 98, then the FPGA at step 304 performs an inverse Fast Fourier Transform function to this frequency domain data , the resultant time-domain ringup-signal being stored in FPGA memory devices 96 and 98..

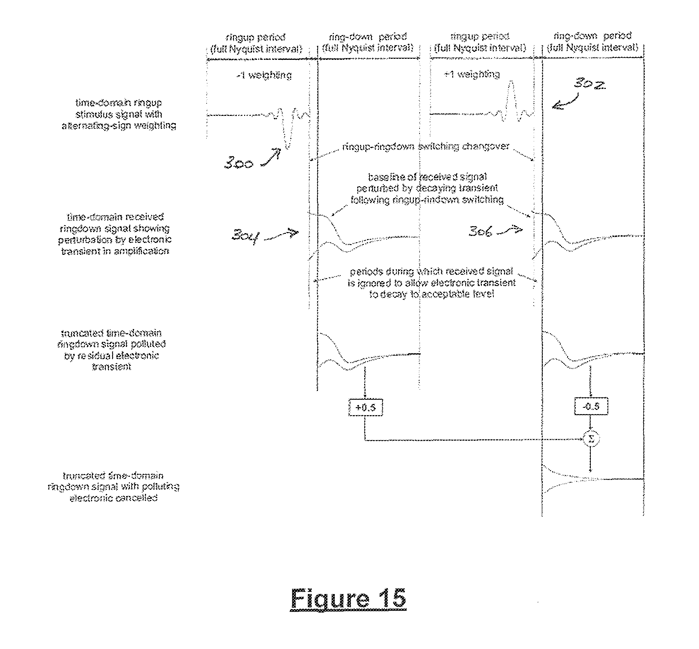

This time-domain signal is passed to the FIR interpolation filters 100 and 102 for interpolation at step 306, up-converted at step 308 by multipliers 104 and106, weighted by +1/-1 at step 309 (as explained in relation to Figure 15), passed to the DAC 76 at step 310, then analogue transmitter section 78 and ultimately the RFID memory device 14 at step 312. At the completion of one or multiple repetitions of the above process, the next partial band centre frequency is calculated and the above procedure repeated.

In order to improve accuracy of the interrogation performed by the RFID interrogation system 10, the same ring-up signal may be applied on a number of consecutive occasions in order that responses from a corresponding number of ring-down signals can be summed and/or averaged in the memory devices 138 and 140. Accordingly, at step 314, a determination is made by the microcomputer 70 as to whether a desired number of ring-up signals in a given partial band have been applied to the RFID memory device 14. If this is not the case, then a subsequent ring-up signal is applied. However, if the desired number of ring-up signals in a given partial band has been applied, then the microcomputer 70 repeats steps 300 to 314 until the desired number of ring-up signals have been applied in each of partial bands 210 to 218 within the frequency range 200.

Accuracy of this interrogation method generally increases with the ratio of the partial-band width to the resonator bandwidth, though quite modest ratios prove to be acceptable.

The spectral amplitude and shape of the ring-up signals depicted in Figure 8 is affected by a number of factors, including the overall response of the coupling between the RFID interrogator 12 and the RFID memory device 14, the inherent response of the chip on in the vibratable members are formed, and the resonance of the electrical circuit itself. These factors result in the frequency response across the entire frequency range 200 peaking at a central frequency and being attenuated further away from that central frequency. This response shape will in general change with the particular setting of the tuning MOSFETs 156. In order to compensate for this characteristic, an equalisation function can be applied to the spectral shapes of the frequency domain representations of the ring-up signals 210 to 218. This equalisation function is applied by the microcomputer 70 to the frequency-domain spectral synthesis data that is passed to the IFFT block 72 so as to compensate for the frequency response 220.

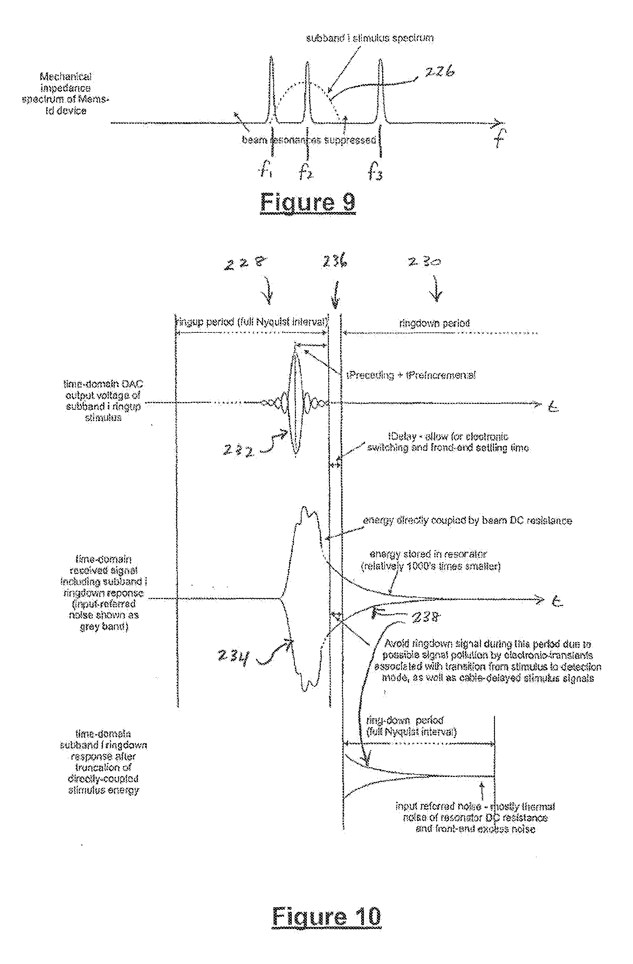

The electrical manifestation of the resonances occurring within the RFID memory device 14 may not be present within any particular partial band. Figure 9 shows one illustrative example, in which resonances at frequencies F1, F2 and F3 occur within the RFID memory device 14. However, a particular frequency partial-band stimulus spectrum 226 may extend across a frequency sub-range including only the resonances at frequencies F1 and F2. Moreover, due to the half sinusoidal shape of the stimulus spectrum, the electrical manifestation of the mechanical resonances F1 and F2 will be excited to a greater or lesser extent.

Illustrative time-domain representations of the ring-up phase 228 and ring-down phase 230 of interrogation are shown in Figure 10. As shown at step 320 of Figure 6, once each ring-down signal has been received, and converted from an analogue to a digital form at step 322, and weighted by +1/-1 at step 323, the ring-down signal is down converted at step 324 by multiplication with the cosine and sine forms of the output of the local oscillator 86 at the same frequency at which the ring-up signal stimulus was generated. Once each ring-up signal has been down converted into real and imaginary components, the FIR decimation filters 134 and 136 at step 326 act to filter and down-sample each of these two components. The time domain data is then accumulated by the summation devices 142 and 144 into the memory devices 138 and 140, at step 330, for the purposes of obtaining an average ring-down response.

At step 332, the system determines whether all ring-up signals transmitted for a given partial-band centre-frequency have been received by the RFID interrogator 12. If this is not the case, then steps 320 to 330 are repeated for each subsequent ring-down signal detected. However, if all ring-down signals for a given partial-band have been accumulated, then the microcomputer 70 collects the data from memory devices 138 and 140. The microcomputer 70 then combines this data and corresponding data associated with other partial-bands and analyses the result for the presence of resonances of the vibrating members from the RFID memory device 14 and determine the data encoded in the RFID memory device 14 from these resonances.

Accordingly, the FPGA device 71 applies a FFT function at step 334 to the data stored in the memory devices 138 and 140 in order to convert that data into a frequency domain representation. The frequency domain representation of the ring-down signal is then collected by the microcomputer 70 and stored and subsequently analysed in memory device 90.

At step 338, the next partial-band within the frequency range 200 is then investigated by the RFID interrogator 12. That is, steps 320 to 336 are repeated in order to detect ring-down signals received in a next partial-band, sum and/or average the down converted and decimated real and imaginary components of the ring-down signal, derive a frequency domain representation of those components, and then store the data for that next frequency sub-range. When it has been determined at step 340 that the last partial-band within the frequency range 200 has been analysed, then at step 350 data from all sub-ranges is combined by addition with appropriate weighting by phase factors and resonances from the vibratable members 16 to 42 are detected at step 352. Finally, the resonances are used by the microcomputer 70 to derive data encoded in the RFID memory device 14, at step 354.

During detection of a ring-down signal 240, signal attenuation will occur to differing extents depending upon the particular frequency sub-range currently being used to interrogate the RFID memory device 14. In order to compensate for this variable attenuation, an equalisation function is applied by the microcomputer 70 to the frequency domain representation of the summed and/or averaged ring-down signal within each frequency sub-range.

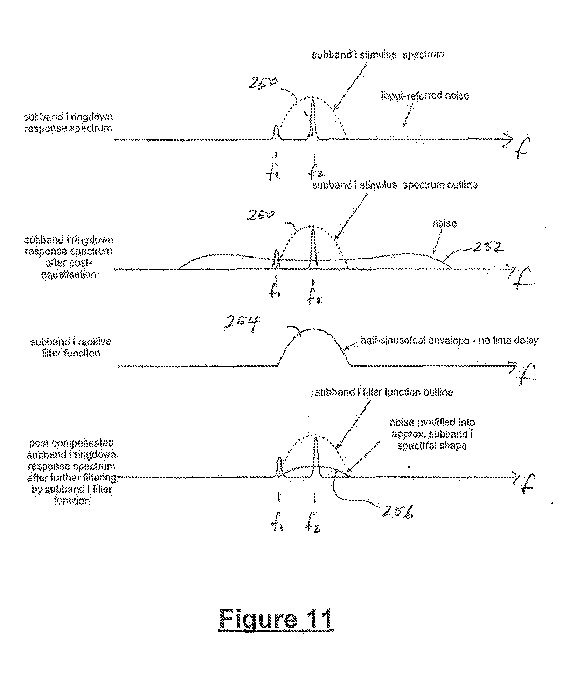

Figure 11 depicts a spectral shape 250 of the ring-up signal applied in a particular frequency sub-range, as well as the electrical manifestation of the change in impedance in the electrical equivalent circuit of the RFID memory device 14 resultant from two vibratable members having their resonant frequencies at frequencies F1 and F2 within that partial band. However, noise is also present across the frequency range, as represented by the curve 252. By applying a half sinusoidal shaped equalisation function 254 to the frequency domain representation of the received ring-down signals, the spectral shape 256 of the noise forming part of the ring-down signal is modified so as to minimise the masking effect of the noise upon the detection of the resonances at frequencies F1 and F2, and to limit the overall noise level when multiple ring-down responses are combined.

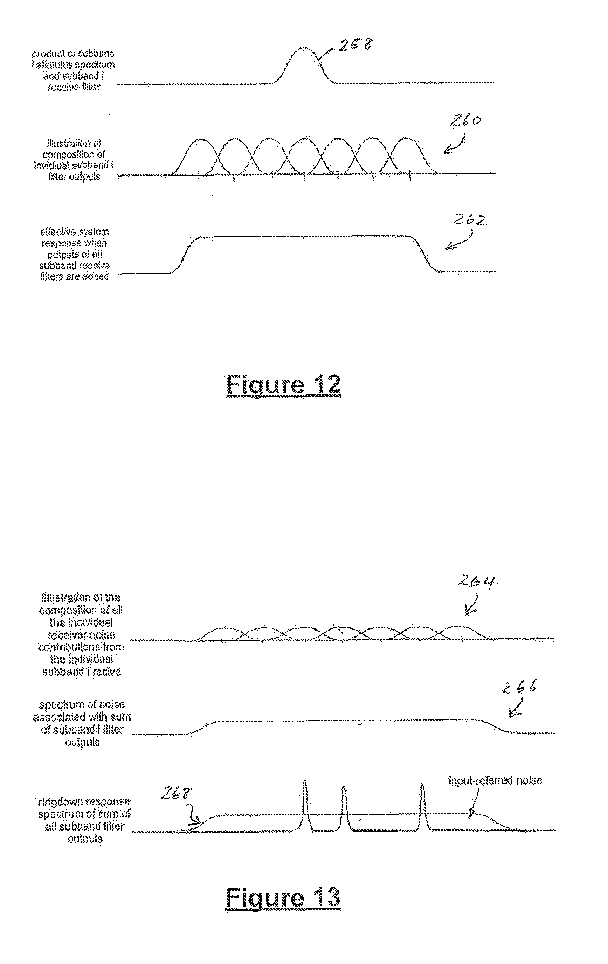

As a result of the two half sinusoidal shaping functions applied, one which comprises the frequency domain representation of the ring-up signal and the other to the frequency domain representation of the ring-down signal, the product of these two equalisation functions results in a squared sinusoidal form 258, as shown in Figure 12. By ensuring that consecutive partial-bands overlap by 50 per cent, the frequency domain data stored in the memory device 94 of the microcomputer 70 at step 336 following receipt of the various ring-down signals in each frequency sub-range can by appropriate complex summation result in an effectively constant system response across all partial-bands. This is depicted in Figure 13 in the two spectral shapes 260 and 262 respectively representing the spectral shapes of individual frequency sub-ranges before and after combination. This addition entails weighting each partial-band contribution by phase factors in compensation of time delays within the FPGA filter chain as well as delays imposed prior to and following transitions of the switches 114 and 116.

The two spectral shapes 264 and 266 shown in Figure 13 respectively represent the spectral shapes of noise variance in individual partial-band before and after combination. Since the noise variance associated with each partial-band possesses the sinusoid-squared form, which overlap by 50 per cent, the input-referred noise variance 268 across the combined spectra of the partial-band ring-down signals is approximately constant, and equal to the maximum variance of the signal at the centre of any single partial-band ring-down spectra.

It will be appreciated that the sinusoidal shaping functions applied to the ring-up and ring-down signals in the above-described example are examples of shaping functions that enable the combined ring-down responses to yield an overall response which is substantially flat across the frequency range. Shaping functions having other forms may be applied to one or both of the ring-up and ring-down signals in other embodiments of the invention to achieve the same result.

Optimal detection methods are used to ensure that spectral peaks are maximally resolved with respect to noise. This procedure enhances the reliability of bit-detection where the signal-to-noise ratio is small. A simple method employs convolution-in-frequency, using a test function with spectral shape identical to or representative of the spectral shape of the resonance being detected. The properties of the convolving function may itself depend on frequency such as to most advantageously individually maximise the resolution of spectral peaks from noise, particularly where the frequency range is large. A related method of optimal detection may entail performing the time-domain equivalent of a convolution-in-frequency, namely multiplication of the Fourier Transform of the spectrum by the Fourier Transform of the convolving function, followed by an Inverse Fourier Transform operation to obtain the optimal detected spectrum. This latter option may in some circumstances be computationally advantageous.

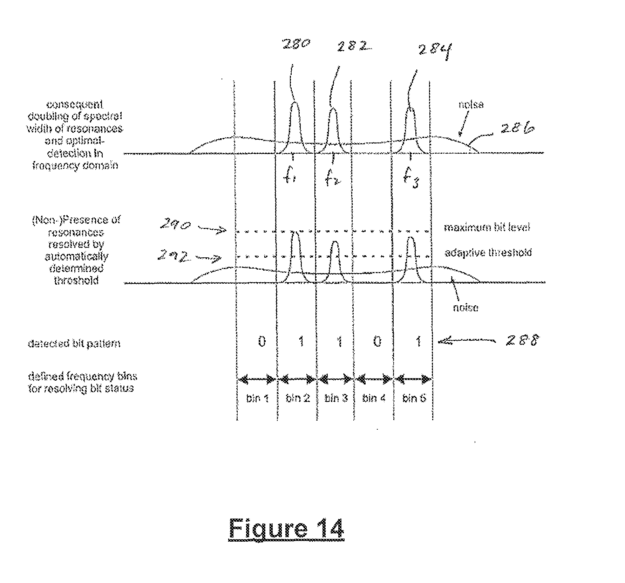

As can be seen in Figure 14, following combination of the summed and/or averaged data received during the ring-down signals for each frequency sub-range, the resonances at frequencies at F1, F2 and F3 will result in peaks 280, 282 and 284 being present in the data, together with a background level of noise 286. By detecting the presence or absence of peaks within each of the frequency sub-ranges 210 to 218, the microcomputer 70 is able to infer a binary sequence 288 representing data encoded in the RFID memory tag 214. In order to assist in the detection of the peaks 280 to 284, the microcomputer 70 may use various properties of the peaks, for example the average, or the maximum, etc, to infer a suitable adaptive threshold 292 for the decision as to whether or not a particular resonance is present at some frequency or within some frequency interval, or to count the number of resonances falling within some frequency range.

In order to further improve the performance of the RFID interrogator 12, the phase of consecutive ring-up signals are is by introduction of a multiplier 146 in the partial band up-conversion/interpolation block 74 and a multiplier 148 in the partial band down-conversion/decimation block 84. These multipliers are used to multiply the output of the block 74 and input to the block 84 ultimately by +1 or -1 in order to invert the phases of consecutive ring-up signals. Advantageously, this acts to cancel the effect of electrical transients resulting from and following the transition of transmitter switch 114 and receiver switch 116 between the end of the ring-up period and the beginning of the ring-down period. Figure 15 depicts time-domain representations of consecutive ring-up signals 300 and 302 which are substantially identical except for their opposite phases. Inverting the phase of consecutive ring-up signals effectively causes summing, and thus cancellation, of the electronic transients which appear in corresponding ring-down signals 304 and 306.

## Claims

1. A method of interrogating an RFID memory device (14) encoding data, the memory device including one or more vibrating members (16-34)each being able to resonate, upon application of a ring-up signal (228), at a different known resonant frequency selected from a series of known resonant frequencies within a frequency range, the method including the steps of:
(a) applying (312) a sequence of ring-up signals (210-218) to the memory device, each ring-up signal being applied in a different frequency partial-band within the frequency range;
(b) after each ring-up signal, receiving (320) a ring-down signal from the memory device;
(c) detecting (352) resonances of the vibrating members from the ring-down signals; and
(d) determining (354) the encoded data from the detected resonances.

2. A method according to claim 1, and further including the step of:
repeating steps (a) and (b); and
prior to detecting resonances of the vibrating members, averaging the ring-down signals applied in the same partial-band.

3. A method according to either one of claims 1 or 2, wherein step (c) includes:
generating (334) frequency domain representations of ring-down signals applied in the same partial-band;
combining (350) the frequency domain representations of ring-down signals applied in all partial-bands within the frequency range; and
detecting (352) resonances of the vibrating members from the combined frequency domain representations of ring-down signals.

4. A method according to claim 3, wherein the step of combining all frequency domain representations of ring-down signals includes summing the complex amplitudes of the frequency domain representation of ring-down signals.

5. A method according to claim 4, and further including the step of applying a shaping function (250) to one or both of the ring-up and ring-down signals such that the plurality of ring-down responses is combined in step (c) to yield an overall response which substantially flat across the frequency range.

6. A method according to claim 5, wherein the shaping function applied to ring-up signals in each frequency partial-band is half-sinusoidal.

7. A method according to either one of claims 5 or 6, wherein the shaping function applied to ring-down signals in each frequency partial-band is half-sinusoidal.

8. A method according to any one of claims 5 to 7, wherein at least a plurality of the partial-bands overlap.

9. A method according to claim 8, wherein the amount of overlap is 50%.

10. A method according to any one of claims 5 to 9, wherein the received noise level associated with the overall response is substantially identical to the noise level with the response associated with any individual partial-band.

11. A method according to any one of claims 5 to 10, wherein each shaping function is centred on a corresponding partial-band centre frequency, and the width of each shaping function is equal to twice the frequency increment between adjacent partial-band centre frequencies.

12. A method according to any one of the preceding claims, wherein step (a) includes applying an equalisation function to the spectral shape of the ring-up signals across the frequency range.

13. A method according to claim 12, and further including the step of changing the form of the equalisation function every one or more partial-bands.

14. A method according to any one of the preceding claims, wherein step (b) includes applying an equalisation function to the spectral shape of the ring-down signals across the frequency range.

15. A method according to claim 14, and further including the step of changing the form of the equalisation function every one or more partial-bands.

16. A method according to any one of the preceding claims, wherein steps (a) and (b) respectively include inverting the phase of consecutive ring-up signals, and performing compensating inversion of the ring-down response, so as to eliminate the contribution of electrical transients associated with the ring-up/ring-down hardware transition to the averaged ring-down response.

17. An RFID interrogator (12) for interrogating an RFID memory device (14) encoding data, the memory device including one or more vibrating members (16-34) each being able to respond, upon application of a ring-up signal (228), at a different known resonant frequency selected from a series of known resonant frequencies within a frequency range, the RFID interrogator including
ring-up circuitry for applying a sequence of ring-up signals to the memory device, each ring-up signal being applied in a different frequency partial-bands within the frequency range;
ring-down circuitry for receiving a ring-down signal from the memory device after each ring-up signal; and
analysis circuitry and/or software for detecting resonances of the vibrating members from the ring-down signals, and for determining the encoded data from the detected resonances.

## Patentansprüche

1. Verfahren zum Abfragen einer RFID-Speichervorrichtung (14), die Daten codiert, wobei die Speichervorrichtung ein oder mehrere schwingende Elemente (16 - 34) aufweist, von denen jedes in der Lage ist, beim Anlegen eines Ring-up-Signals (228) auf einer anderen bekannten Resonanzfrequenz mitzuschwingen, die aus einer Reihe bekannter Resonanzfrequenzen in einem Frequenzbereich ausgewählt ist, wobei das Verfahren die Schritte aufweist:
(a) Anlegen (312) einer Sequenz von Ring-up-Signalen (210 - 218) an die Speichervorrichtung, wobei jedes Ring-up-Signal in einem anderen Frequenz-Teilband in dem Frequenzbereich angelegt wird;
(b) nach jedem Ring-up-Signal Empfangen (320) eines Ring-down-Signals von der Speichervorrichtung;
(c) Erkennen (352) von Resonanzen der schwingenden Elemente aus den Ring-down-Signalen und
(d) Ermitteln (354) der codierten Daten aus den erkannten Resonanzen.

2. Verfahren nach Anspruch 1, das ferner den Schritt aufweist:
Wiederholen der Schritte (a) und (b) und
vor einem Erkennen von Resonanzen der schwingenden Elemente Mittelwertbildung aus den in demselben Teilband angelegten Ring-down-Signalen.

3. Verfahren nach einem der Ansprüche 1 oder 2, wobei Schritt (c) beinhaltet:
Erzeugen (334) von Frequenzdomänendarstellungen von in demselben Teilband angelegten Ring-down-Signalen;
Kombinieren (350) der Frequenzdomänendarstellungen von in allen Teilbändern in dem Frequenzbereich angelegten Ring-down-Signalen und
Erkennen (352) von Resonanzen der schwingenden Elemente aus den kombinierten Frequenzdomänendarstellungen von Ring-down-Signalen.

4. Verfahren nach Anspruch 3, wobei der Schritt des Kombinierens aller Frequenzdomänendarstellungen von Ring-down-Signalen ein Addieren der komplexen Amplituden der Frequenzdomänendarstellung von Ring-down-Signalen beinhaltet.

5. Verfahren nach Anspruch 4, das ferner den Schritt eines Anwendens einer Formgebungsfunktion (250) auf das Ring-up und/oder Ring-down-Signal beinhaltet, derart, dass mehrere Ring-down-Antworten in Schritt (c) kombiniert werden, um eine Gesamtantwort zu ergeben, die im Wesentlichen flach über den Frequenzbereich ist.

6. Verfahren nach Anspruch 5, wobei die Formgebungsfunktion, die in jedem Frequenz-Teilband auf Ring-up-Signale angewendet wird, halbsinusförmig ist.

7. Verfahren nach einem der Ansprüche 5 oder 6, wobei die Formgebungsfunktion, die in jedem Frequenz-Teilband auf Ring-down-Signale angewendet wird, halbsinusförmig ist.

8. Verfahren nach einem der Ansprüche 5 bis 7, wobei sich mindestens mehrere der Teilbänder überlappen.

9. Verfahren nach Anspruch 8, wobei das Ausmaß der Überlappung 50 % beträgt.

10. Verfahren nach einem der Ansprüche 5 bis 9, wobei der empfangene Rauschpegel, der mit der Gesamtantwort in Zusammenhang steht, im Wesentlichen identisch mit dem Rauschpegel ist, der mit der Antwort in irgendeinem einzelnen Teilband in Zusammenhang steht.

11. Verfahren nach einem der Ansprüche 5 bis 10, wobei jede Formgebungsfunktion auf eine entsprechende Teilband-Mittenfrequenz zentriert ist und die Breite jeder Formgebungsfunktion gleich dem Zweifachen des Frequenzinkrements zwischen benachbarten Teilband-Mittenfrequenzen ist.

12. Verfahren nach einem der vorangehenden Ansprüche, wobei Schritt (a) ein Anwenden einer Entzerrungsfunktion auf die Spektralform der Ring-up-Signale über den Frequenzbereich beinhaltet.

13. Verfahren nach Anspruch 12, das ferner den Schritt eines Änderns der Form der Entzerrungsfunktion bei jedem Teilband oder häufiger beinhaltet.

14. Verfahren nach einem der vorangehenden Ansprüche, wobei Schritt (b) ein Anwenden einer Entzerrungsfunktion auf die Spektralform der Ring-down-Signale über den Frequenzbereich beinhaltet.

15. Verfahren nach Anspruch 14, das ferner den Schritt eines Änderns der Form der Entzerrungsfunktion bei jedem Teilband oder häufiger beinhaltet.

16. Verfahren nach einem der vorangehenden Ansprüche, wobei die Schritte (a) und (b) jeweils ein Umkehren der Phase aufeinanderfolgender Ring-up-Signale und ein Ausführen einer kompensierenden Umkehrung der Ring-down-Antwort beinhalten, um den Beitrag elektrischer Transienten zu beseitigen, der mit dem Ringup/Ring-down-Hardwareübergang zu der gemittelten Ring-down-Antwort in Zusammenhang steht.

17. RFID-Abfragevorrichtung (12) zum Abfragen einer RFID-Speichervorrichtung (14), die Daten codiert, wobei die Speichervorrichtung ein oder mehrere schwingende Elemente (16 - 34) aufweist, von denen jedes in der Lage ist, beim Anlegen eines Ring-up-Signals (228) auf einer anderen bekannten Resonanzfrequenz zu antworten, die aus einer Reihe bekannter Resonanzfrequenzen in einem Frequenzbereich ausgewählt ist, wobei die RFID-Abfragevorrichtung aufweist:
Ring-up-Schaltungen zum Anlegen einer Sequenz von Ring-up-Signalen an die Speichervorrichtung, wobei jedes Ring-up-Signal in einem anderen Frequenz-Teilband in dem Frequenzbereich angelegt wird;
Ring-down-Schaltungen zum Empfangen eines Ring-down-Signals von der Speichervorrichtung nach jedem Ring-up-Signal und
Analyseschaltungen und/oder -software zum Erkennen von Resonanzen der schwingenden Elemente aus den Ring-down-Signalen und zum Ermitteln der codierten Daten aus den erkannten Resonanzen.

## Revendications

1. Procédé d'interrogation d'un dispositif de mémoire RFID (14) codant des données, le dispositif de mémoire comprenant un ou plusieurs organes vibrants (16 - 34) qui sont chacun en mesure de résoner, à l'application d'un signal de mise en résonance (228), à une fréquence résonnante connue différente sélectionnée dans une série de fréquences résonnantes connues à l'intérieur d'une plage de fréquences, le procédé comprenant les étapes de :
(a) l'application (312) d'une séquence de signaux de mise en résonance (210 - 218) au dispositif de mémoire, chaque signal de mise en résonance étant appliqué dans une bande partielle de fréquences différente à l'intérieur de la plage de fréquences ;
(b) après chaque signal de mise en résonance, la réception (320) d'un signal de suppression de résonance provenant du dispositif de mémoire ;
(c) la détection (352) de résonances des organes vibrants à partir des signaux de suppression de résonance ; et
(d) la détermination (354) des données codées à partir des résonances détectées.

2. Procédé selon la revendication 1, comprenant en outre l'étape de :
la répétition des étapes (a) et (b) ; et
avant la détection de résonances des organes vibrants, le moyennage des signaux de suppression de résonance appliqués dans la même bande partielle.

3. Procédé selon l'une des revendications 1 et 2, dans lequel l'étape (c) comprend :
la génération (334) de représentations dans le domaine de fréquence de signaux de suppression de résonance appliqués dans la même bande partielle ;
la combinaison (350) des représentations dans le domaine de fréquence de signaux de suppression de résonance appliqués dans toutes les bandes partielles à l'intérieur de la plage de fréquences ; et
la détection (352) de résonances des organes vibrants à partir des représentations combinées dans le domaine de fréquence de signaux de suppression de résonance.

4. Procédé selon la revendication 3, dans lequel l'étape de la combinaison de toutes les représentations dans le domaine de fréquence de signaux de suppression de résonance comprend la sommation des amplitudes complexes de la représentation dans le domaine de fréquence de signaux de suppression de résonance.

5. Procédé selon la revendication 4, comprenant en outre l'étape de l'application d'une fonction de mise en forme (250) à l'un ou aux deux du signal de mise en résonance et du signal de suppression de résonance de sorte que la pluralité de réponses de suppression de résonance soit combinée à l'étape (c) pour donner une réponse globale qui s'aplatit sensiblement à travers la plage de fréquences.

6. Procédé selon la revendication 5, dans lequel la fonction de mise en forme appliquée à des signaux de mise en résonance dans chaque bande partielle de fréquences est semi-sinusoïdale.

7. Procédé selon la revendication 5 ou 6, dans lequel la fonction de mise en forme appliquée à des signaux de suppression de résonance dans chaque bande partielle de fréquences est semi-sinusoïdale.

8. Procédé selon l'une quelconque des revendications 5 à 7, dans lequel au moins une pluralité des bandes partielles se chevauchent.

9. Procédé selon la revendication 8, dans lequel la quantité de chevauchement est de 50 %.

10. Procédé selon l'une quelconque des revendications 5 à 9, dans lequel le niveau de bruit reçu associé à la réponse globale est sensiblement identique au niveau de bruit avec la réponse associée à n'importe quelle bande partielle individuelle.

11. Procédé selon l'une quelconque des revendications 5 à 10, dans lequel chaque fonction de mise en forme est centrée sur une fréquence centrale de bande partielle correspondante, et la largeur de chaque fonction de mise en forme est égale à deux fois l'incrément de fréquence entre des fréquences centrales de bande partielle adjacentes.

12. Procédé selon l'une quelconque des revendications précédentes, dans lequel l'étape (a) comprend l'application d'une fonction d'égalisation à la forme spectrale des signaux de mise en résonance à travers la plage de fréquences.

13. Procédé selon la revendication 12, comprenant en outre l'étape du changement de la forme de la fonction d'égalisation au rythme d'une ou plusieurs bandes partielles à la fois.

14. Procédé selon l'une quelconque des revendications précédentes, dans lequel l'étape (b) comprend l'application d'une fonction d'égalisation à la forme spectrale des signaux de mise en résonance à travers la plage de fréquences.

15. Procédé selon la revendication 14, comprenant en outre l'étape du changement de la forme de la fonction d'égalisation au rythme d'une ou plusieurs bandes partielles à la fois.

16. Procédé selon l'une quelconque des revendications précédentes, dans lequel les étapes (a) et (b) comprennent respectivement l'inversion de la phase de signaux de mise en résonance consécutifs et l'exécution d'une compensation d'inversion de la réponse de suppression de résonance, de manière à éliminer la contribution de transitoires électriques associés à la transition matérielle de mise en résonance/suppression de résonance dans la réponse de suppression de résonance moyennée.

17. Interrogateur RFID (12) pour interroger un dispositif de mémoire RFID (14) codant des données, le dispositif de mémoire comprenant un ou plusieurs organes vibrants (16 - 34) qui sont chacun en mesure de répondre, à l'application d'un signal de mise en résonance (228), à une fréquence résonnante connue différente sélectionnée dans une série de fréquences résonnantes connues à l'intérieur d'une plage de fréquences, l'interrogateur RFID comprenant :
une circuiterie de mise en résonance pour effectuer l'application d'une séquence de signaux de mise en résonance au dispositif de mémoire, chaque signal de mise en résonance étant appliqué dans une bande partielle de fréquences différente à l'intérieur de la plage de fréquences ;
une circuiterie de suppression de résonance pour effectuer la réception d'un signal de suppression de résonance provenant du dispositif de mémoire après chaque signal de mise en résonance ; et
une circuiterie d'analyse et/ou un logiciel pour effectuer la détection de résonances des organes vibrants à partir des signaux de suppression de résonance et la détermination des données codées à partir des résonances détectées.
